# EUROPEAN PATENT APPLICATION

(11) **EP 2 113 166 A1**
(43) Date of publication of application: **04.11.2009**
(21) Application number: 09005510.4
(22) Date of filing: 18.04.2009
(51) Int. Cl.: A01G 9/08

(54) **Soil container for flowers and plants with sliding frame for the transplantation**

(30) Priority: 28.04.2008 IT CS20080007
(71) Applicant: De Fazio, Vincenzo, 87040 Mendicino (CS) (IT)
(72) Inventor: De Fazio, Vincenzo, 87040 Mendicino (CS) (IT)

(57) **Abstract**

The invention is a flowerpot consisting of a soil vase (1) containing a removable perforated frame (2) that allows the user to remove the plant by hand.

Alternatively the plant can be removed from its pot by other means.

This invention can be produced in different shapes and size depending the amount of soil and the kind of plant contained therein.

The invention ensures the stability of the roots and the soil when flowers and plants are removed from the pot and transplanted.

## Description

This innovative conception opens the way to a new generation of flowerpots made up of different parts that can be used, not only to contain plants, but also to remove and transplant them, with their roots and soil undisturbed, without the need to use gardening tools. This invention ensures the stability of the roots and the soil also when the plant is transplanted into another container.

Whith tha traditional flower pot, one often has to use tools such as a spade or trowel to remove the plant from its vase and transplant it and this operation can have a traumatic effect on the plant on account of the inevitable severing af the roots especially in the growth area. Transplanting, therefore, can cause stress and have an extremely negative effect on further plant growth.

This invention obviates the risk of such problems, thanks to its removable soil-holding frame that ensure that thr whole operation can be carried out without violent and damaging movements such as overturning and shaking the vase.

The removable soil-holding frame, thanks to its perforations can be placed directly-together with its soil and the plant itself- into another container without endangering the roots as a consequence of transplanting, moreover, the perforations allow the growing roots to spread into the new soil.

Subsequently, the frame can be reused for a later transplant since it does not lose its function even after long periods in the ground.

The invention, therefore, if adopted can lead to savings both in terme of cost (i.e. there is no longer a need for costly gardening tools for transplanting) but also in terms of time and effort, because the work af removing and transplanting becomes quicker and easier.

The invention, as described in the claims that follow, is designed to guarantee the stability of the soil and roots during the transplanting of pot plants and flowers.

The process can be better explained through the use of drawings that provide a purely indicative illustration of how it works.

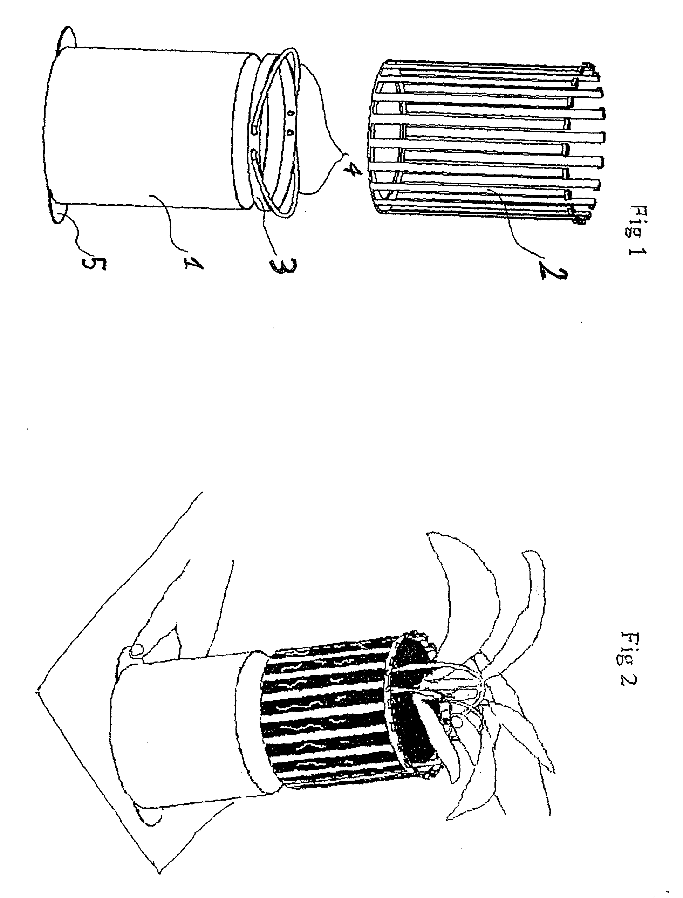

Figure 1 provides an axonometric exploded view of the item in order to highlight the working of all its components.

Figure 2 provides an axonometric view of the item with the plant rooted in the soil illustrating how the invention can be used manually.

From these images it can be seen that the item is made up of a container 1 whithin which there is an removable soil-holding frame 2.

Inserted between the container and the soil-holding frame is the ring 3 with two handles 4 that can be grasped and drawn upwards.

When it is time to remove the plant from the container 1, the user can block the container 1 pressing manually or by another means on the lug nuts 6, grasps the handles 4 of the ring, and by drawing upwards makes the ring 3 hold the frame 2 that sliding on de inner surface of the container 1 frees the soil and the plant.

## Claims

1. Complex item for containing, removing and transplating flowers and plants made up of a container (1) which houses a perforated frame (2) that can be removed by an extractor (3) that enables the user to remove the plant or flower complete with all the soil without the use of other means.

2. Complex item for containing, removing and transplating flowers and plants, as claimed in claim 1, **characterised by** the fact that the soil and the plant can also removed by other means.

3. Complex item for containing, removing and transplating flowers and plants, as claimed in claim 1 and claim 2 **characterised by** the fact that the soil container (1) is equipped with lug nuts that allow the user to block the container by the pressure of his hands.

4. Complex item for containing, removing and transplating flowers and plants, as claimed in claim 1, claim 2 and claim 3, **characterised by** tha fact that the components are realised in varios shapes and size in relation to the quantity of soil contained therein, with tha aim of guaranteeing the stability of the soil and the roots of the plants while carrying out the work of removing and transplanting

5. Complex item for containing, removing and transplating flowers and plants, as claimed in claim 1, claim 2, claim 3 and claim 4 **characterised by** tha fact that the removable component (3) is made whith perforation so that it can be placed directly in the earth whithout endangering the normal growth of the roots.
